Europäisches Patentamt

European Patent Office

Office européen des brevets

(19)

(11) Numéro de publication : **0 145 534**
**B1**

(12) **FASCICULE DE BREVET EUROPÉEN**

(45) Date de publication du fascicule du brevet :
27.07.88

(51) Int. Cl.⁴ : **G 01 C 19/56, G 01 P 9/04**

(21) Numéro de dépôt : **84402137.8**

(22) Date de dépôt : **24.10.84**

(54) **Gyromètre acoustique.**

(30) Priorité : 02.11.83 FR 8317513

(43) Date de publication de la demande :
**19.06.85 Bulletin 85/25**

(45) Mention de la délivrance du brevet :
**27.07.88 Bulletin 88/30**

(84) Etats contractants désignés :
**BE CH DE GB IT LI NL SE**

(56) Documents cités :
**US-A- 3 352 162**
**US-A- 3 625 067**

(73) Titulaire : **BADIN CROUZET**
**Aéroport de Toussus-le-Noble Boîte Postale No. 13**
**F-78117 Chateaufort (Yvelines) (FR)**

(72) Inventeur : **Gohin, Christian**
**31, Allée des Tilleuls**
**F-78470 Magny les Hameaux (Yvelines) (FR)**
Inventeur : **Leblond, Henri**
**1, Résidence La Roseraie**
**F-78000 Versailles (Yvelines) (FR)**

(74) Mandataire : **Bloch, Robert et al**
**6, rue du Faubourg Saint-Honoré**
**F-75008 Paris (FR)**

EP 0 145 534 B1

## Description

La présente invention concerne les gyromètres sans rotor matériel, du type utilisant l'influence des forces de Coriolis sur les particules d'un fluide contenu dans une cavité résonante, et comprenant des moyens d'excitation pour générer et entretenir des oscillations acoustiques longitudinales dans ladite cavité selon un axe d'excitation et des moyens pour mesurer les variations de pression transversales apparaissant au niveau d'un nœud de vibration, selon un axe de mesure, lorsque la cavité pivote autour d'un axe perpendiculaire au plan des oscillations.

Dans les dispositifs connus de ce type, tel que le gyromètre acoustique décrit dans le brevet américain N° 2 999 389, un générateur d'oscillations électriques fait vibrer, par l'intermédiaire d'une bobine d'excitation, un diaphragme disposé au fond d'une cavité fermée. Une onde acoustique longitudinale s'établit dans la cavité. En fonction des dimensions de la cavité et de la fréquence d'excitation on s'arrange pour que l'onde acoustique présente un nœud de pression en un point bien déterminé. Lorsque la cavité pivote autour d'un axe perpendiculaire au plan des oscillations, les forces de Coriolis génèrent un mode oscillatoire stationnaire, transverse au mode d'excitation, dont l'amplitude est proportionnelle à la vitesse de rotation de la cavité. Pour mesurer cette pression acoustique transverse, image de l'amplitude de l'oscillation transverse, deux tubes sont disposés de part et d'autre de la cavité sur un axe de mesure, situé au niveau du nœud de pression, pour transmettre les variations de pression à un micro différentiel.

On admet que la vitesse de rotation de la cavité peut être déduite de la relation :

$$F = 2 p \, \Omega \, \mu. \, \sin \omega_1 \, t$$

où p est la masse des molécules gazeuses,
μ. l'amplitude de la vitesse instantanée sinusoïdale d'excitation des molécules,
$\Omega$ la vitesse angulaire de rotation de la carte,
$\omega_1$ la fréquence d'oscillation des molécules,
F l'amplitude des variations de pressions transverse dues aux forces de Coriolis.

Cependant, en pratique, un tel gyromètre présente des inconvénients.

— Il est de réalisation délicate car il faut que la demi-longueur d'onde de l'onde acoustique d'excitation corresponde exactement à la longueur de la cavité, faute de quoi la position du nœud de pression, sur lequel s'effectuent les mesures, sera imprécise ;

— l'influence des harmoniques n'est pas négligeable et se traduit par des erreurs de mesures ;

— le couplage entre l'organe d'excitation et le gaz est important ce qui entraîne un faible coefficient de surtension de la cavité et une influence importante des défauts des excitateurs sur la localisation exacte du nœud de pression ;

l'utilisation d'un micro différentiel raccordé à la cavité par des tuyaux de prises de pressions crée des déphasages dus aux retards pneumatiques, en outre le couplage avec la cavité n'est pas négligeable du fait de l'importance des diamètres des tuyaux nécessaires vis-à-vis de la longueur d'onde des oscillations.

On connaît aussi, par le document US-A-3 352 162, un dispositif d'un type voisin, dans lequel le signal proportionnel à la vitesse de rotation à mesurer est délivré par un phasemètre qui mesure la phase entre le signal appliqué aux moyens d'excitation, et le signal délivré par un transducteur disposé au centre de la cavité.

Dans un tel dispositif, toute dérive de l'oscillateur qui délivre le signal d'excitation se traduit par une importante erreur de mesure.

Le gyromètre acoustique suivant l'invention permet d'éviter ces inconvénients. C'est ainsi qu'il comprend, en plus des dispositifs connus, des moyens pour réaliser l'asservissement en phase de l'oscillation acoustique longitudinale dans la cavité. Il se caractérise en ce que la fréquence propre de la cavité, suivant l'axe de mesure, est la même que la fréquence propre de la cavité suivant son axe d'excitation. Il se caractérise également en ce que l'on utilise un mode de couplage faible entre excitateur et cavité, obtenu en employant un excitateur dont l'impédance acoustique est très grande vis-à-vis de l'impédance acoustique du fluide contenu dans la cavité.

L'asservissement en phase de la cavité permet de s'affranchir des variations de longueur de la cavité et des fluctuations de la vitesse de propagation des oscillations dans le fluide en fonction de la température. En outre, du fait de l'asservissement de phase permanent, la position des ventres de l'onde d'excitation donc du nœud utilisé pour les mesures est stabilisé et correspond rigoureusement avec la position des micros de mesure. Les effets des harmoniques sont éliminés par comparaison de l'onde émise avec une onde de référence rigoureusement sinusoïdale. Un autre moyen pour améliorer les performances d'un gyromètre selon l'invention consiste à utiliser un mode de couplage faible entre excitateur et cavité acoustique. Pour cela on utilise un excitateur dont l'impédance acoustique est très grande vis-à-vis de l'impédance acoustique du gaz contenu dans la cavité. Ce qui permet d'avoir un coefficient de surtension élevé pour la cavité.

Ceci peut être réalisé de deux moyens :
— Soit en employant un excitateur constitué par un disque piézoélectrique de diamètre très faible vis-à-vis des dimensions de la cavité. En ce cas, on génère des ondes sphériques ;
— Soit en employant un excitateur de grand diamètre mais d'épaisseur très faible, de l'ordre de quelques microns.

En ce cas on génère des ondes planes.

Pour éliminer l'influence néfaste des tuyaux tels que décrits dans le brevet US N° 2 999 389, les variations de pression, au niveau du nœud de l'onde acoustique, sont mesurées au moyen de deux microphones montés en différentiel et disposés dans ou à proximité immédiate de la cavité. Cette disposition élimine les effets de retards pneumatiques et les signaux parasites engendrés par les vibrations ou les bruits acoustiques du porteur sur lequel est monté le gyromètre.

L'orifice de couplage de ces micros à la cavité est réalisé par une fente extrêmement fine, ce qui permet de conserver des dimensions, dans le sens de l'onde d'excitation, très réduites par rapport à la longueur d'onde tout en conservant une section de passage suffisante.

Le dessin annexé illustre, à titre d'exemple, un mode de réalisation de gyromètre acoustique conforme à la présente invention.

La figure 1 représente une cavité résonnante avec ses axes privilégiés d'utilisation.

La figure 2 schématise un gyromètre conforme à l'invention.

Les figures 3 et 4 montrent la réalisation d'une fente de couplage.

La figure 5 représente une cavité résonnante pour gyromètre deux axes.

La figure 6 schématise la réalisation d'un gyromètre trois axes.

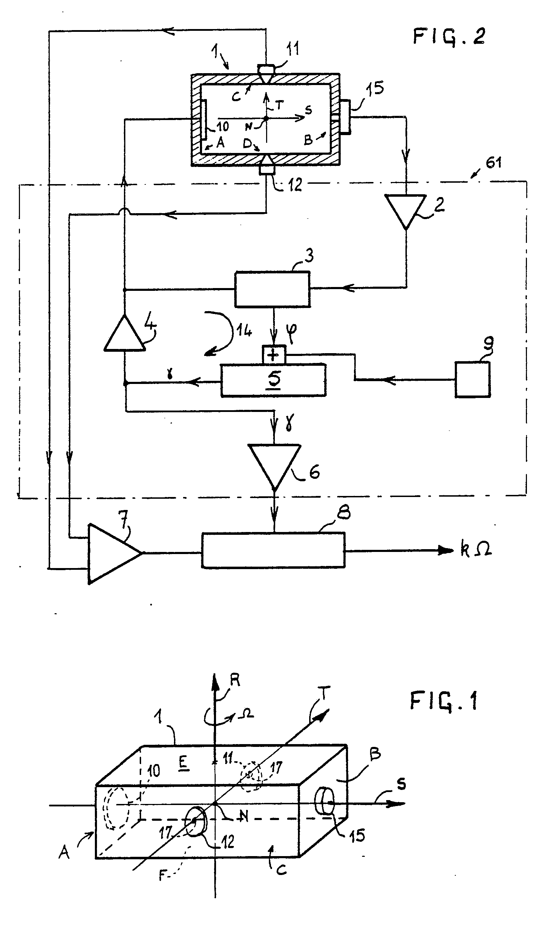

Pour un gyromètre un axe, la cavité résonnante est avantageusement un volume, symétrique autour de son axe longitudinal S, réalisé en métal. Ce peut être, par exemple, un cylindre ou un parallélépipède rectangle 1, tel que représenté figure 1.

Pour un gyromètre un axe, les parois opposées E et F, sur l'axe R correspondant à l'axe de rotation, sont de section carrée, de l'ordre de $40 \times 40$ mm$^2$ et distantes l'une de l'autre d'environ 27 mm. Cette cavité est excitée acoustiquement au moyen du transducteur 10 disposé sur la paroi A. Ce transducteur est constitué par un disque en matériau piézoélectrique d'un diamètre de 20 mm et d'une épaisseur de quelques microns. Un tel disque fournit un niveau sonore d'environ 100 dB. La fréquence de résonance à l'excitation est de 4 350 Hz environ à la température ambiante. Lorsque la cavité est remplie d'air, son coefficient de surtension atteint 150.

Dans ces conditions, un nœud d'onde N s'établit au centre de la cavité sur son axe transversal T. Deux microphones de mesure 11 et 12 sont disposées sur chacune des deux faces parallèles du parallélépipède, coupées par l'axe transversal T, et ajustés axactement à un endroit où règne un nœud de pression, soit au centre de la cavité dans l'exemple considéré. Dans la mesure où le coefficient de surtension de la cavité est suffisamment élevé, aucun signal n'est observé aux bornes des microphones 11 et 12, montés en différentiels, en l'absence de mouvement de rotation du dispositif autour de l'axe R. A noter au passage qu'il est possible de n'utiliser qu'un seul microphone. La mise en rotation de la cavité autour de l'axe R, ou de tout autre axe parallèle à R, modifie le régime vibratoire des molécules du gaz contenu dans la cavité.

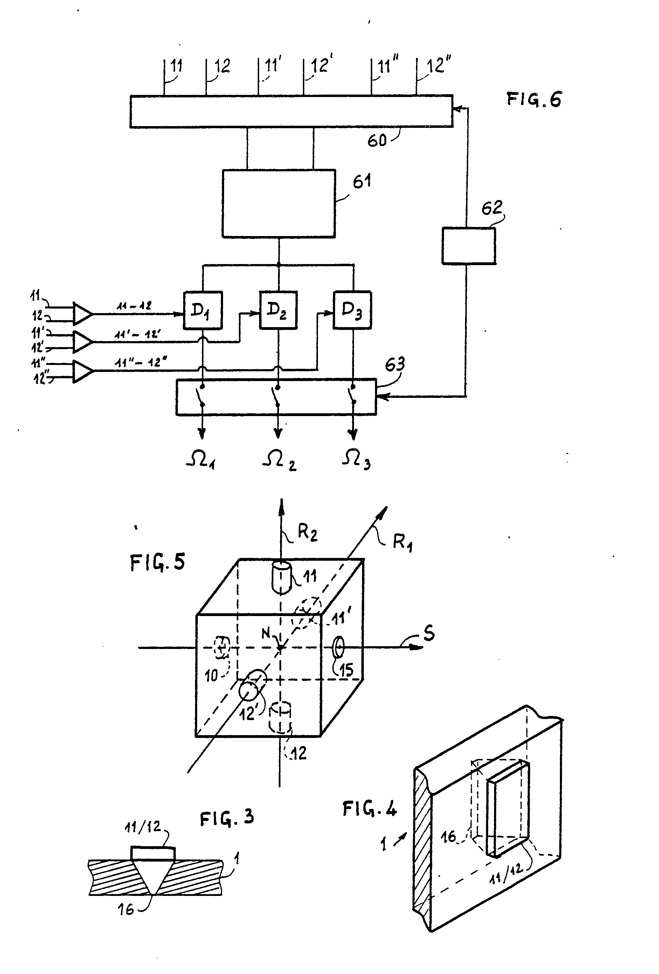

Pendant la rotation, une onde acoustique, dont la direction de propagation T (figure 2) est orthogonale à l'axe longitudinal S prend naissance et est détectée par les microphones de mesure 11 et 12. L'amplitude de cette onde est proportionnelle à la vitesse de rotation de la cavité autour de l'axe R, ou de tout autre axe parallèle.

Une boucle d'asservissement en phase 14 permet de maintenir le régime d'onde stationnaire calé en phase par rapport à la cavité et à la fréquence de résonnance de ladite cavité, quelles que soient ces variations de fréquence, par exemple consécutives à une variation de température du fluide contenu dans la cavité 1. Ce dispositif maintient le nœud de pression au centre de la cavité, indépendamment de tous les effets perturbateurs, ce qui améliore fondamentalement les caractéristiques de ce type de gyromètre.

Cette boucle est réalisée par un comparateur de phase 3 qui délivre un signal φ proportionnel au déphasage existant entre les ondes de pression acoustique respectivement présentes sur les parois A et B. Ce signal φ commande un générateur 5 de signaux électriques, du type oscillateur à fréquence variable à commande en tension. Le signal φ s'annule lorsque les conditions suivantes sont réalisées :

— fréquence du générateur = fréquence de résonance acoustique de la cavité ;

— déphasage de 180° entre les pressions acoustiques au niveau des parois A et B.

Toute variation de l'une de ces conditions sera mesurée par le comparateur de phase 3 qui générera la tension de correction φ et le système se régulera automatiquement.

Le signal γ de sortie de l'oscillateur 5, après amplification par un amplificateur 4, est injecté dans l'excitateur 10, tandis que le signal recueilli par le micro de référence 15 est mis en forme par un comparateur amplificateur 2.

Le signal κΩ représentatif de la vitesse angulaire à mesurer est obtenu par une démodulation classique des signaux issus des micros de mesure 11-12, amplifiés et filtrés par un amplificateur 7. Pour cela, un démodulateur 8 est synchronisé par le signal γ du générateur 5 après mise en forme au travers d'un ampli 6.

Pour faire démarrer les oscillations dans la cavité, un dispositif 9 de mise en route permet l'excitation initiale avant le calage en phase de l'ensemble. Ce dispositif consiste en un générateur de rampe de tension permettant le balayage de tout le domaine de résonance de la cavité. Ce signal de démarrage est appliqué à l'oscillateur 5 sur son entrée en sommation avec le signal φ. Une fois l'oscillation obtenue, sur la fréquence propre de la cavité acoustique, c'est le signal φ qui contrôle les évolutions de fréquence de l'oscillateur.

Pour éviter tout couplage parasite de la cavité avec le micro de référence ou les micros de mesure, ceux-ci sont de très petite taille. Ils sont par exemple constitués de microphones à électret de 5 mm de diamètre et couplés à la cavité par un trou 17 de 0,8 mm de diamètre et d'une profondeur de 1 mm. Pour améliorer encore les performances en sensibilité et surtout en stabilité on peut utiliser une fente pour le couplage acoustique des ondes transversales, selon l'axe T, avec les microphones de mesure 11 et 12. Ceci permet de réduire la dimension des orifices de prélèvement de pression de mesure suivant l'axe longitudinal d'excitation S, et par là même de localiser èxactement la zone de mesure sur le nœud de pression N de l'onde d'excitation tout en éliminant les retards pneumatiques. De bons résultats sont obtenus avec des fentes 16, de 10 mm de longueur pour une largeur de 0,05 mm, réalisées dans les parois C et D de la cavité, tel que représenté figures 3 et 4.

En variante, il est possible de réaliser des gyromètres à 2 ou 3 axes de sensibilité.

Ainsi pour réaliser un gyromètre deux axes, tel que représenté figure 5, la cavité résonnante doit être symétrique autour de l'axe d'excitation S, par exemple cubique, cylindrique ou sphérique pour pouvoir disposer deux paires de micros de mesures 11-12 et 11'-12' selon deux axes orthogonaux dans un plan perpendiculaire à l'axe d'excitation S et passant par le nœud N des oscillations. Ainsi la mesure par les micros 11-12 permet de déceler les rotations autour de l'axe R1 et celle par les micros 11'-12' les rotations autour de l'axe R2. Dans ce cas un circuit électronique supplémentaire est nécessaire comportant un second démodulateur exploitant les signaux issus des micros de mesure 11' et 12' de façon identique au démodulateur déjà décrit. Un gyromètre trois axes nécessite une cavité résonnante ayant un centre de symétrie tel qu'un cube ou une sphère par exemple.

Dans ces conditions on utilise des éléments identiques disposés selon 3 axes orthogonaux comme excitateurs, micros de référence, et micros de mesure afin de les utiliser alternativement comme excitateurs, micros de référence ou de mesure par commutations successives, selon les rotations $\Omega_1$, $\Omega_2$ ou $\Omega_3$ à mesurer. La figure 6 schématise la réalisation d'un tel gyromètre à 3 axes de mesure. Les trois paires de micros 11, 12-11', 12' et 11", 12" sont reliées à un commutateur d'excitation 60 ayant pour but de sélectionner successivement une paire de micros comme couple excitateur-micro de référence, et de la mettre en liaison avec le circuit d'asservissement en phase 61.

Les mesures 11-12, 11'-12', 11"-12" arrivent respectivement sur trois démodulateurs D1, D2 et D3 dont les signaux sont sélectionnés au moyen d'un inhibiteur de sortie 63 selon l'axe de rotation $\Omega_1$, $\Omega_2$ ou $\Omega_3$ à considérer.

Un séquenceur 62 assure l'exploitation successive dans le temps, des combinaisons des micros, en excitateurs ou en micros de mesure.

Le dispositif selon l'invention se prête particulièrement bien à la réalisation de gyromètres fiables et pouvant fonctionner dans une grande plage de température tels que ceux utilisés dans le domaine de l'aéronautique.

**Revendications**

1. Gyromètre du type utilisant l'influence de la force de Coriolis sur un fluide contenu dans une cavité résonnante (1) et comprenant des moyens excitateurs (10) pour générer et entretenir des oscillations acoustiques longitudinales dans ladite cavité (1) selon un axe d'excitation (S), et des moyens (11, 12) pour mesurer des variations de pression transversales apparaissant au niveau d'un nœud de vibration (N) selon un axe de mesure (T), lorsque la cavité est déplacée autour d'un axe (R) perpendiculaire à l'axe d'excitation (S) et à l'axe de mesure (T), caractérisé en ce qu'il est prévu des moyens (14) pour réaliser l'asservissement en phase de l'onde acoustique d'excitation de la cavité (1).

2. Gyromètre, selon la revendication 1, caractérisé en ce que l'on utilise un mode de couplage faible entre excitateurs (10) et cavité (1), obtenu en utilisant un excitateur (10) dont l'impédance acoustique est très grande vis-à-vis de l'impédance acoustique du fluide contenu dans la cavité (1).

3. Gyromètre, selon l'une des revendications 1 et 2, caractérisé en ce que la fréquence propre de la cavité (1), suivant l'axe de mesure (T), est la même que la fréquence propre de la cavité suivant son axe d'excitation (S).

4. Gyromètre, selon l'une des revendications 2 et 3, caractérisé en ce que l'excitateur est constitué d'un disque piézoélectrique dont le diamètre est très petit vis-à-vis des dimensions de la cavité.

5. Gyromètre, selon l'une des revendications 2 et 3, caractérisé en ce que l'excitateur (10) est constitué d'un disque de grand diamètre, vis-à-vis des dimensions de la cavité, et d'épaisseur très faible de l'ordre de quelques microns.

6. Gyromètre, selon l'une des revendications 1 et 2, caractérisé en ce que les moyens pour mesurer les variations de pression consistent en deux microphones (11, 12) montés en différentiel de part et d'autre de la cavité (1).

7. Gyromètre, selon la revendication 6, caractérisé en ce que le ou les microphones (11, 12) sont couplés chacun à la cavité au moyen d'une fente (16), de largeur inférieure ou égale à sensiblement le millième de la longueur d'onde des oscillations acoustiques.

8. Gyromètre, selon l'une des revendications 1 à 7, caractérisé en ce que deux mesures simultanées orthogonales de vitesse de rotation sont possibles en utilisant une cavité résonnante symétrique autour de l'axe d'excitation (S) et possèdant deux paires (11-12, 11'-12') de microphones de mesure disposées selon deux axes orthogonaux ($R_2$, $R_1$) dans un plan perpendiculaire à l'axe d'excitation (S).

9. Gyromètre, selon l'une des revendications 1 à 8, caractérisé en ce qu'un système de commutation (60-63) à l'émission et à la réception permet de mesurer par échantillonnage successif d'un séquenceur (62), les vitesses de rotation ($\Omega_1$, $\Omega_2$, $\Omega_3$) selon trois axes orthogonaux.

## Claims

1. Gyrometer of the type employing the influence of the Coriolis force on a fluid contained in a resonant cavity (1) and comprising exciting means (10) for generating and maintaining longitudinal acoustic oscillations in said cavity (1) along an axis of excitation (S), and means (11, 12) for measuring the transverse pressure variations appearing at the level of a vibration node (N) along an axis of measurement (T), when the cavity is displaced about an axis (R) perpendicular to the axis of excitation (S) and to the axis of measurement (T), characterized in that means (14) are provided for effecting servo-control in phase of acoustic excitation wave of the cavity (1).

2. Gyrometer according to claim 1, characterized in that a weak coupling mode between exciters (10) and cavity (1) is used, obtained by employing an exciter (10) of which the acoustic impedance is very high with respect to the acoustic impedance of the fluid contained in the cavity (1).

3. Gyrometer according to one of claims 1 and 2, characterized in that the natural frequency of the cavity (1), along the axis of measurement (T), is the same as the natural frequency of the cavity along its axis of excitation (S).

4. Gyrometer according to one of claims 2 and 3, characterized in that the exiter is constituted by a piezoelectric disc whose diameter is very small with respect to the dimensions of the cavity.

5. Gyrometer according to one of claims 2 and 3 characterized in that the exciter (10) is constituted by a disc of large diameter with respect to the dimensions of the cavity, and of very small thickness, of the order of some microns.

6. Gyrometer according to one of claims 1 and 2, characterized in that the means for measuring the pressure variations consist in two microphones (11, 12) mounted in differential on either side of the cavity (1).

7. Gyrometer according to claim 6, characterized in that the microphone or microphones (11, 12) are each coupled to the cavity by means of a slot (16), of width smaller than or equal to substantially the thousandth of the wavelength of the acoustic oscillations.

8. Gyrometer according to one of claims 1 to 7, characterized in that two simultaneous orthogonal measurements of speed of rotation are possible by using a resonant cavity symmetrical about the axis of excitation (S) and possessing two pairs (11-12, 11'-12') of measuring microphones disposed along two orthogonal axes ($R_2$, $R_1$) in a plane perpendicular to the axis of excitation (S).

9. Gyrometer according to one of claims 1 to 8 characterized in that a switching system (60-63) at emission and at reception makes it possible to measure, by successive sampling of a sequencer (62), the speeds of rotation ($\Omega_1$, $\Omega_2$, $\Omega_3$) about three orthogonal axes.

## Patentansprüche

1. Gyrometer der Art, die den Einfluß der Corioliskraft auf ein Fluid in einem Resonanzhohlraum (1) nutzt und Erregungsmittel (10) zum Erzeugen und Aufrechterhalten von akustischen Longitudialschwingungen in dem Resonanzhohlraum (1) in Richtung einer Erregungsachse (S) und Mittel (11, 12) zum Messen der Änderungen des Transversaldrucks aufweist, die in gleicher Fläche mit einem Schwingungsknoten (N) auf einer Meßachse (T) erscheinen, wenn der Resonanzhohlraum um eine Achse (R) angetrieben ist, die auf der Erregungsachse (S) und der Meßachse (T) senkrecht steht, gekennzeichnet durch Mittel (14) zur Regelung der Phase der akustischen Welle der Erregung des Resonanzhohlraumes (1).

2. Gyrometer nach Anspruch 1, gekennzeichnet durch eine schwache Kopplung zwischen den Erregungsmitteln (10) und dem Resonanzhohlraum (1) durch Verwendung eines Erregers (10), dessen akustische Impedanz sehr groß ist im Vergleich mit derjenigen des Fluids in dem Resonanzhohlraum (1).

3. Gyrometer nach Anspruch 1 oder 2, dadurch gekennzeichnet, daß die Eigenfrequenz des Resonanzhohlraums (1) in Richtung der Meßachse (T) derjenigen in Richtung der Erregungsachse (S) gleich ist.

4. Gyrometer nach Anspruch 2 oder 3, dadurch gekennzeichnet, daß der Erreger von einer piezoelektrischen Scheibe gebildet ist, deren Durchmesser im Vergleich mit den Abmessungen des Resonanzhohlraums sehr klein ist.

5. Gyrometer nach Anspruch 2 oder 3, dadurch gekennzeichnet, daß der Erreger (10) von einer Scheibe gebildet ist, deren Durchmesser im Vergleich mit den Abmessungen des Resonanzholhlraums groß ist und die eine geringe Dicke in der Größenordnung von einigen μm aufweist.

6. Gyrometer nach Anspruch 1 oder 2, dadurch gekennzeichnet, daß die Mittel zum Messen der Änderungen des Drucks zwei Mikrophone (11, 12) umfassen, die beiderseits des Resonanzhohlraums (1) differentialweise angebracht sind.

7. Gyrometer nach Anspruch 6, dadurch gekennzeichnet, daß das oder die Mikrophon(e) (11, 12) je mittels einer Öffnung (16) an den Resonanzhohlraum gekoppelt ist (sind), deren Größe kleiner als ein oder gleich einem Tausendstel der akustischen Wellenlänge ist.

8. Gyrometer nach einem der Ansprüche 1 bis 7, dadurch gekennzeichnet, daß zwei Messungen senkrecht zur Rotationsgeschwindigkeit gleichzeitig möglich sind, wobei ein um die Erregungsachse Erregungsachse (S) Resonanzhohlraum und zwei Paare Mikrophone (11, 12; 11', 12') verwendet werden, welche auf zwei orthogonalen Achsen ($R_2$, $R_1$) in einer Ebene senkrecht zu der Erregungsachse (S) angeordnet sind.

9. Gyrometer nach einem der Ansprüche 1 bis 8, gekennzeichnet durch eine Schaltung (60 bis 63) zum Abgeben und Aufnehmen, wobei die Messung durch schrittweises Abtasten der Rota-

tionsgeschwindigkeiten ($\Omega_1$, $\Omega_2$, $\Omega_3$) in drei orthogonalen Achsen mittels eines Taktgebers (62) erfolgt.

FIG.2

FIG.1

FIG.6

FIG.5

FIG.3

FIG.4